**Europäisches Patentamt**

(19) **European Patent Office**

**Office européen des brevets**

(11) Numéro de publication: **0 262 006 B1**

(12) **FASCICULE DE BREVET EUROPEEN**

(45) Date de publication du fascicule du brevet:
**19.07.89**

(21) Numéro de dépôt: **87401885.6**

(22) Date de dépôt: **14.08.87**

(51) Int. Cl.⁴: **B60T 13/56**, F16B 21/09

(54) Ensemble d'un servomoteur de freinage monté sur une paroi fixe d'un véhicule et procédé d'assemblage d'un tel ensemble.

(30) Priorité: **10.09.86 FR 8612669**

(43) Date de publication de la demande:
**30.03.88 Bulletin 88/13**

(45) Mention de la délivrance du brevet:
**19.07.89 Bulletin 89/29**

(84) Etats contractants désignés:
**DE ES GB IT**

(56) Documents cités:
**FR-A- 1 512 696**
**FR-A- 1 536 500**
**GB-A- 617 576**
**US-A- 3 358 449**

(73) Titulaire: **BENDIX France Société Anonyme dite:, 126, rue de Stalingrad, F-93700 Drancy(FR)**

(72) Inventeur: **Gautier, Jean-Pierre, 46ter Avenue Louis Blanc, F-93600 Aulnay Sous Bois(FR)**

(74) Mandataire: **Lejet, Christian et al, Division Technique Service Brevets BENDIX Europe 126, rue de Stalingrad, F-93700 Drancy(FR)**

ACTORUM AG

## Description

La présente invention concerne les sytèmes de freinage de véhicule, et, plus particulièrement, un ensemble d'un servomoteur de freinage monté sur une face de paroi fixe d'un véhicule, comprenant au moins un boulon de montage ayant une tête solidaire du servomoteur et une partie filetée traversant un premier orifice formé dans la paroi, et un écrou vissé sur l'extrémité filetée du boulon faisant saillie par rapport à l'autre face de la paroi.

Classiquement (voir par exemple le document US-A-3 358 449), un servomoteur de freinage est monté sur la paroi fixe du véhicule au moyen d'au moins un boulon, typiquement au moins deux boulons de montage introduits, depuis le compartiment moteur du véhicule, dans des orifices circulaires correspondants formés dans la paroi fixe, après quoi un écrou est vissé sur l'extrémité filetée de chaque boulon faisant saillie de l'autre côté de la paroi fixe, typiquement dans le compartiment voyageur du véhicule, le boulon étant vissé à fond pour venir coopérer en appui axial contre l'autre face de la paroi fixe.

Les problèmes de compacité et d'encombrement des véhicules modernes rendent de plus en plus difficile l'accès à la face arrière de la paroi fixe, qui se trouve généralement déportée profondément sous le tableau de bord au voisinage de la console centrale de ce dernier et des ferrures des pédales, de sorte que la mise en place de l'écrou sur le boulon s'avère une opération longue et difficile pour l'opérateur, pouvant induire un faussage des filets de l'écrou et/ou du boulon et donc contribuer à la réalisation d'un assemblage imparfait, voire défectueux.

La présente invention a pour objet de pallier ces inconvénients en proposant un ensemble d'un servomoteur de freinage monté sur une paroi fixe d'un véhicule, de conception nouvelle, évitant les problèmes de mise en place in situ d'un écrou sur un boulon quasiment inaccessible, voire totalement inaccessible, même avec une visseuse ou boulonneuse adéquate.

Pour ce faire, selon une caractéristique de l'invention, l'orifice dans la paroi fixe du véhicule présente une configuration allongée avec une première zone d'extrémité de section agrandie permettant le passage de l'écrou préalablement vissé sur la partie filetée du boulon en appui axial contre une entretoise tubulaire montée sur le boulon, la première zone d'extrémité de l'orifice se raccordant à une seconde zone d'extrémité de section correspondant à celle de l'entretoise, et un élément formant coin interposable manuellement entre l'autre face de la paroi et l'écrou.

Selon une caractèristique plus particuliére de l'invention, l'élément formant coin est constitué par une plaque comprenant une découpe comportant un bord coopérant en guidage avec l'entretoise et présentant un profil d'épaisseur variable.

Avec un tel agencement, au moins un des boulons de montage du servomoteur se situant dans une zone inaccessible du côté du compartiment voyageur est préalablement équipé de son écrou et de son entretoise, le boulon ainsi équipé étant introduit au travers de la première zone d'extrémité de l'orifice de la paroi, le servomoteur étant ensuite soumis manuellement à un déplacement adéquat pour amener l'entretoise dans la seconde zone d'extrémité de l'orifice, après quoi l'élément formant coin est interposé manuellement entre l'autre face de la paroi et l'écrou pour réaliser un assemblage sûr et sans jeu axial au niveau du boulon.

La présente invention a pour autre objet de proposer un ensemble du type considéré permettant un assemblage rapide et fiable même dans le cas de production en grande série.

Pour ce faire, selon une autre caractéristique de l'invention, la découpe dans la plaque formant coin est constituée sous la forme d'un premier orifice présentant une configuration allongée avec une première zone d'extrémité de section agrandie permettant le passage de l'écrou vissé sur la partie filetée du boulon, en appui contre l'entretoise, et se raccordant à une seconde zone d'extrémité de section correspondant à celle de l'entretoise, le bord de l'orifice présentant une épaisseur augmentant de la première vers la seconde zone.

Selon une caractéristique plus particulière de l'invention, des moyens sont prévus pour immobiliser la plaque en configuration d'assemblage final, ces moyens d'immobilisation étant typiquement constitués par un second orifice allongé formé dans la plaque traversé par un autre boulon de montage du servomoteur traversant un second orifice allongé formé dans la paroi fixe, dans une zone accessible de celle-ci du côté compartiment voyageur, et présentant un bord d'épaisseur variant en sens inverse de celui du bord du premier orifice de la plaque.

Avec un tel agencement, le montage classique par vissage du côté du compartiment voyageur d'un écrou sur un boulon peut être conservé pour le boulon se situant dans une zone aisément accessible, cet écrou étant vissé en appui contre le bord du second orifice de la plaque dont la pente, antagoniste de celle du bord formant coin coopérant avec l'écrou préalablement vissé sur le boulon pourvu d'une entretoise, empêchant tout déplacement intempestif de la plaque à partir de sa configuration d'assemblage final obtenue antérieurement manuellement.

D'autres caractéristiques et avantages de la présente invention ressortiront de la description suivante d'un mode de réalisation, donné à titre illustratif mais nullement limitatif faite en relation avec les dessins annexés, sur lesquels :

- la figure 1 est une vue schématique d'un ensemble d'un servomoteur de freinage monté sur une paroi fixe de véhicule ;
- la figure 2 est une vue en coupe schématique de la zone d'assemblage F de la figure 1 ;
- la figure 3 est une vue schématique suivant le plan III-III de la figure 1 ;
- la figure 4 est une vue en plan de la plaque d'assemblage et de blocage ; et
- les figures 4A à 4C sont des coupes partielles suivantes lignes de coupe A-A ; B-B et C-C de la figure 4.

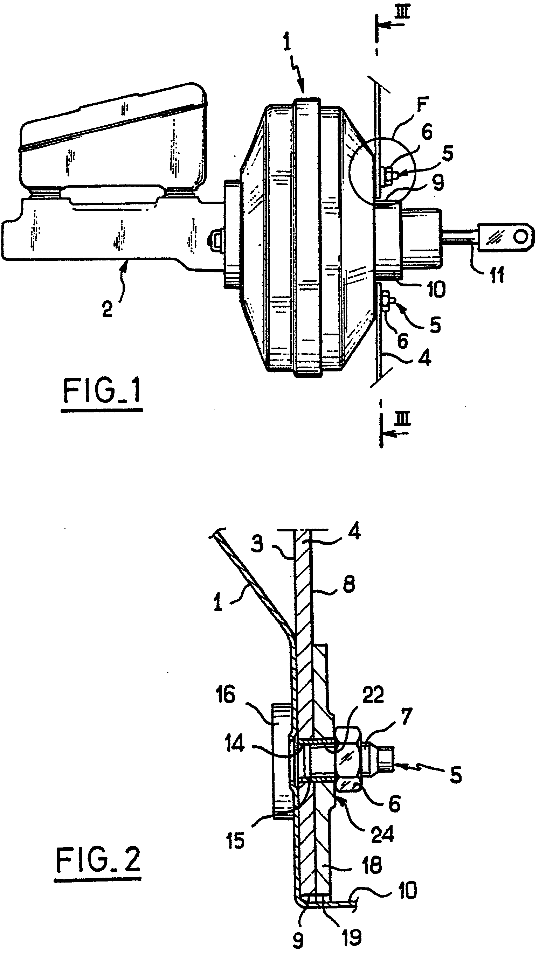

On a représenté sur la figure 1 un montage classique d'un servomoteur de freinage du type à dépression 1 couplé à un maître-cylindre de freinage 2 et monté en porte-à-faux sur la face antérieure 3 d'une paroi fixe 4 d'un véhicule, typiquement la paroi dite "pare-feu", au moyen d'au moins deux boulons, typiquement trois boulons 5 solidaires du boîtier du servomoteur 1 et traversant chacun un orifice formé dans la paroi fixe 4, l'assemblage s'effectuant au moyen d'écrous 6 vissés sur l'extrémité filetée de chaque boulon 5 faisant saillie vers l'arrière par rapport à la face postérieure 8 de la paroi 4. Classiquement la paroi 4 comporte une ouverture centrale 9 au travers de laquelle s'étend une partie de cheminée arrière 10 du boîtier du servomoteur 1 par rapport à laquelle fait saillie, vers l'arrière, une tige d'actionnement 11 s'étendant dans le compartiment voyageur du véhicule et destinée à être couplée à une pédale de freinage (non représentée).

Conformément à l'invention, comme on le voit sur les figures 2 à 3, la paroi 4 comporte, typiquement en sa portion supérieure, au moins un, typiquement deux orifices 12 présentant une configuration allongée, avantageusement sensiblement en forme d'arc de cercle, avec une première zone d'extrémité élargie 13, de section supérieure à la section hors tout de l'écrou 6, se raccordant à une seconde zone d'extrémité 14 dont la section correspond à celle d'une entretoise tubulaire 15 destinée à être préalablement montée autour de la partie filetée 7 du boulon 5 pour porter en appui antérieur contre la tête 16 du boulon solidarisé au boîtier du servomoteur ou contre la paroi de ce dernier. La paroi fixe 4 comporte également, décalé angulairement des premiers orifices 12, un second orifice 17 de configuration allongée, typiquement en forme d'arc de cercle, de section constante correspondant à celle de la partie filetée 7 des boulons 5.

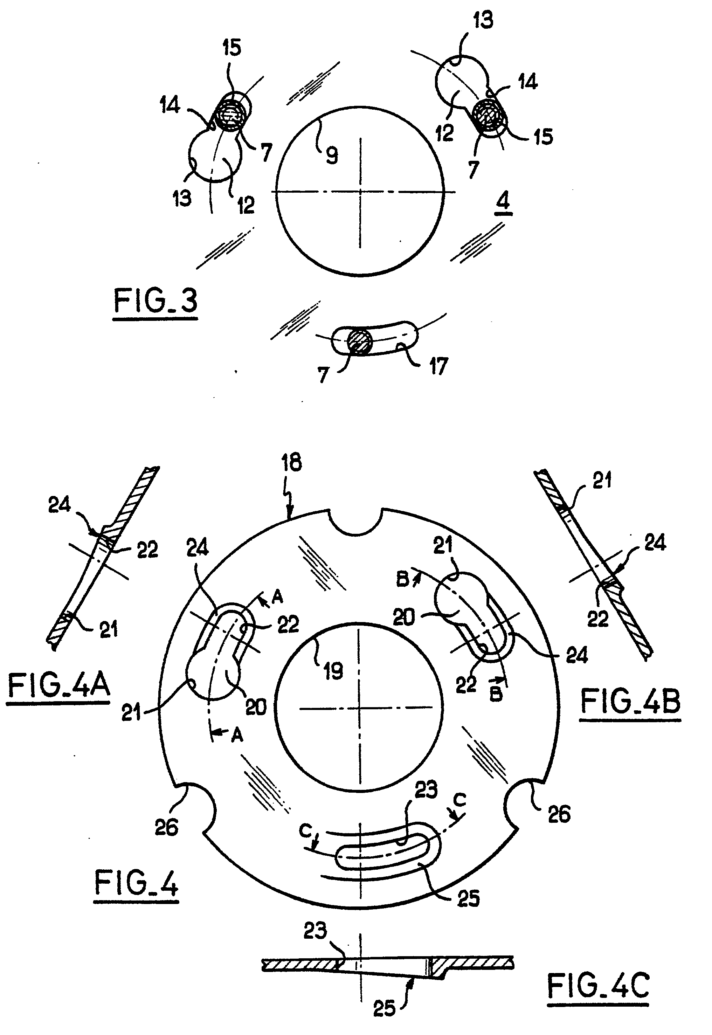

L'ensemble selon l'invention comporte également une plaque d'assemblage et de verrouillage 18, typiquement de forme annulaire, comportant une ouverture centrale 19 permettant le passage de la cheminée 10 du servomoteur et formée, comme la paroi 4, et avec la même distribution angulaire, avec au moins un, typiquement deux premiers orifices 20 présentant chacun, comme les premiers orifices 12 de la paroi 4, une configuration allongée, avantageusement sensiblement en forme d'arc de cercle, avec une première zone d'extrémité agrandie 21, de section supérieure à la section hors tout d'un écrou 6, se raccordant à une seconde zone d'extrémité 22 dont la section correspond à celle de l'entretoise 15. La plaque 18 comporte également un second orifice 23 de configuration allongée, typiquement en forme d'arc de cercle, de section correspondant, comme le second orifice 17 de la paroi 4, à la section de partie filetée 7 du boulon 5. Selon un aspect de l'invention, chaque premier orifice 20 de la plaque 18 comporte un bord 24 dont l'épaisseur varie depuis la première zone d'extrémité 21 jusqu'à la seconde zone d'extrémité 22 (soit dans le sens dextrogyre sur la figure 4) tandis que le second orifice 23 de la plaque 18 comporte, lui, un bord 25 dont l'épaisseur varie en sens inverse de celui des bords 24 (c'est à dire dans le sens levogyre sur la figure 4).

Le procédé de montage de l'ensemble selon l'invention est le suivant : sur les deux boulons destinés à traverser les premiers orifices 12 de la paroi 4 est préalablement enfilée l'entretoise 15, puis l'écrou 6 est vissé à force en appui axial bloqué contre l'entretoise, la face antérieure de l'écrou 6 se trouvant ainsi à une distance déterminée de la face postérieure du boîtier du servomoteur 1. Les deux boulons pourvus de leur entretoise 15 et de leur écrou 6 sont alors introduits au travers des premières zones d'extrémité 13 des premiers orifices 12 de la plaque 4, le boulon résiduel 7 étant, lui, introduit tel quel au travers du second orifice 17 de la paroi 4. On fait alors subir au servomoteur 1 une rotation pour amener les entretoises 15 dans les secondes zones d'extrémité 14 des premiers orifices 12 de la paroi 4. La plaque 18 est alors présentée du côté du compartiment voyageur, en la tenant par son extrémité inférieure, de façon à faire passer les écrous 6 des boulons 7 pourvus d'entretoises 15 au travers des premières zones d'extrémité 21 des premiers orifices 20 de la plaque 18, le boulon nu 7 traversant, pour sa part, le second orifice 23 de la plaque 18. On fait alors subir à la plaque 18, par exemple au moyen d'un outil s'engageant dans une des découpes 26 formées à la périphérie de la plaque 18, une rotation (lévogyre sur la Figure 4) pour placer les entretoises 15 dans les secondes zones d'extrémité 22 des premiers orifices 20 de la plaque 18, ce déplacement provoquant un effet de coin dû aux bords 24 de ces premiers orifices 20, lesdits bords coopérant en guidage avec les entretoises lors du déplacement de la plaque. Une fois l'effet de coin ainsi obtenu, on visse un écrou 6 sur le boulon nu 7, ce boulon venant porter contre la partie amincie du bord d'épaisseur variable 25 du second orifice 23 de la plaque 18, empêchant ainsi tout risque de réduction de l'effet de coin initialement obtenu entre les bords 24 des premiers orifices 20 de la plaque 18 et l'écrou 6, d'une part, et la face postérieure 8 de la paroi fixe 4, d'autre part.

Quoique la présente invention ait été décrite en relation avec un mode de réalisation particulier, elle ne s'en trouve pas limitée mais est au contraire susceptible de modifications et de variantes qui apparaîtront à l'homme de l'art, notamment en ce qui concerne les formes respectives précises des orifices et de la plaque d'assemblage et de verrouillage.

## Revendications

1. Ensemble d'un servomoteur de freinage (1) monté sur une face (3) d'une paroi fixe (4) d'un véhicule, comprenant au moins un boulon de montage (5) ayant une extrémité (16) solidaire du servomoteur et une partie filetée (7) traversant un premier orifice (12) formé dans la paroi, et un écrou (6) vissé sur la partie filetée du boulon faisant saillie par rapport à l'autre face (8) de la paroi fixe (4), caractérisé en ce que le premier orifice (12) de la paroi (4) présente une configuration allongée avec une première zone d'extrémité (13) de section agrandie permettant le passage de l'écrou (6) vissé sur la partie filetée (7) du boulon (5) en appui axial contre une entretoise tubulaire (15), montée sur le boulon, la première zone d'extrémité (13) se raccordant à une seconde zone d'extrémité (14) de section correspondant à celle de l'entretoise (15), et un élément formant coin (18,24) interposé manuellement entre l'autre face (8) de la paroi et l'écrou (6).

2. Ensemble selon la revendication 1, caractérisé en ce que l'élément formant coin est constitué par une plaque (18) comportant une découpe (20) comportant un bord (24) coopérant en guidage avec l'entretoise (15) et présentant une épaisseur variable (24).

3. Ensemble selon la revendication 2, caractérisé en ce que la découpe de la plaque (18) est constituée sous la forme d'un premier orifice (20) présentant une configuration allongée avec une première zone d'extrémité (21) de section agrandie permettant le passage de l'écrou (6) vissé sur la partie filetée (7) du boulon (5) en appui contre l'entretoise (15), la première zone d'extrémité (21) se raccordant à une seconde zone d'extrémité (22) de section correspondant à celle de l'entretoise (15), le bord du premier orifice (24) de la plaque présentant une épaisseur augmentant de la première zone d'extrémité (21) vers la seconde zone d'extrémité (22).

4. Ensemble selon l'une des revendications 1 à 3, caractérisé en ce qu'il comporte des moyens (6,23,25) pour immobiliser la plaque (18) en configuration d'assemblage final.

5. Ensemble selon la revendication 4, caractérisé en ce que les moyens d'immobilisation sont constitués par un second orifice allongé (23) formé dans la plaque (18), traversé par un autre boulon de montage (5) du servomoteur traversant un second orifice allongé (17) dans la paroi, le second orifice (23) de la plaque (18) présentant un bord (25) d'épaisseur variant en sens inverse de celui du bord (24) du premier orifice (20) de la plaque (18).

6. Ensemble selon la revendication 5, caractérisé en ce que les seconds orifices (23 ; 17) de la plaque (18) et de la paroi fixe (4) présentent chacun une section correspondant à celle de la partie filetée (7) du boulon (5).

7. Ensemble selon la revendication 6, caractérisé en ce que les premiers (20 ; 12) et seconds (23 ;17) orifices de la plaque (18) et de la paroi fixe (4) ont une configuration générale en forme d'arc de cercle.

8. Procédé d'assemblage d'un ensemble selon l'une des revendications 3 à 7, caractérisé en ce qu'il comprend les étapes suivantes :
- enfiler préalablement l'entretoise tubulaire (15) sur la partie filetée (7) du boulon (5) ;
- visser le boulon (6) sur cette partie filetée en appui axial contre l'entretoise (15) ;
- faire passer la partie d'extrémité (7) du boulon (5) portant son écrou (6) et son entretoise (15) au travers de la première zone d'extrémité (13) du premier orifice (12) de la paroi fixe (4) ;
- éffectuer un déplacement du servomoteur (1) par rapport à la paroi fixe (4) pour amener l'entretoise (15) dans la seconde zone d'extrémité (14) du premier orifice (12) de la paroi fixe (4) ;
- placer la plaque (18) contre l'autre face (8) de la paroi fixe (4) en faisant passer l'écrou (6) vissé sur la partie filetée (7) du boulon (5) au travers de la première zone d'extrémité (21) du premier orifice (20) de la plaque (18) ;
placer la plaque (18) pour réaliser un effet de coin via le bord (24) du premier orifice (20) de la plaque (18) entre l'autre face (8) de la paroi fixe (4) et l'écrou (6).

9. Procédé selon la revendication 8, pour l'assemblage d'un ensemble selon l'une des revendications 5 à 7, caractérisé en ce qu'il comprend l'étape ultérieure de visser sur l'autre boulon (5) traversant les seconds orifices (23 ; 17) de la plaque (18) et de la paroi fixe (4) un écrou (6) en appui contre la partie amincie du bord (25) du second orifice (23) de la plaque (18).

**Claims**

1. Brake booster unit (1) mounted on one face (3) of a fixed wall (4) of a vehicle, possessing at least one assembly bolt (5), having one end (16) fixed to the booster and a threaded part (7) passing through a first orifice (12) made in the wall, and a nut (6) screwed onto the threaded part of the bold projecting relative to the other face (8) of the fixed wall (4), characterized in that the first orifice (12) in the wall (4) has an elongate shape with a first end zone (13) of enlarged cross-section, allowing the passage of the nut (6) screwed onto the threaded part (7) of the bolt (5) so as to be axially up against a tubular spacer (15) mounted on the bolt, the first end zone (13) being connected to a second end zone (14) of a cross-section corresponding to that of the spacer (15), and an element forming a wedge (18, 24) being interposed manually between the other face (8) of the wall and the nut (6).

2. Unit according to Claim 1 characterized in that the element forming a wedge consists of a plate (18) possessing a cut-out (20) having an edge (24) interacting with the spacer (15) so as to guide the latter and having a variable thickness (24).

3. Unit according to Claim 2, characterized in that the cut-out in the plate (18) is made in the form of a first orifice (20) having an elongate shape with a first end zone (21) of enlarged cross-section, allowing the passage of the nut (6) screwed onto the threaded part (7) of the bolt (5) so as to be up against the spacer (15), the first end zone (21) being connected to a second end zone (22) of a cross-section corresponding to that of the spacer (15), the edge of the first orifice (24) in the plate having a thickness increasing from the first end zone (21) towards the second end zone (22).

4. Unit according to any of claims 1 to 3, characterized in that it has means (6, 23, 25) for immobilizing the plate (18) in the final assembly configuration.

5. Unit according to Claim 4, characterized in that the immobilizing means consist of a second elongate orifice (23) which is made in the plate (18) and through which passes another assembly bolt (5) of the booster extending through a second elongate orifice (17) in the wall, the second orifice (23) in the plate (18) having an edge (25) of a thickness varying in the opposite direction to that of the edge (24) of the first orifice (20) in the plate (18).

6. Unit according to Claim 5, characterized in that the second orifices (23; 17) in the plate (18) and in the fixed wall (4) each have a cross-section corresponding to that of the threaded part (7) of the bolt (5).

7. Unit according to Claim 6, characterized in that the first orifices (20; 12) and second orifices (23; 17) in the plate (18) and in the fixed wall (4) have a general shape in the form of an arc of a circle.

8. Process for assembling a unit according to any of Claims 3 to 7, characterized in that it involves the following steps:

previously slipping the tubular spacer (15) over the threaded part (7) of the bolt (5);

screwing the nut (6) onto this threaded part so that it is axially up against the spacer (15);

passing the end part (7) of the bolt (5) carrying its nut (6) and its spacer (15) through the first end zone (13) of the first orifice (12) in the fixed wall (4);

moving the booster (1) relative to the fixed wall (4) in order to bring the spacer (15) into the second end zone (14) of the first orifice (12) in the fixed wall (4);

placing the plate (18) against the other face (8) of the fixed wall (4) by passing the nut (6) screwed onto the threaded part (7) of the bolt (5) through the first end zone (21) of the first orifice (20) in the plate (18); and moving the plate (18) to produce a wedge effect between the other face (8) of the fixed wall (4) and the nut (6) via the edge (24) of the first orifice (20) in the plate (18).

9. Process according to Claim 8 for assembling a unit according to any of Claims 5 to 7, characterized in that it involves the subsequent step of screwing onto the other bolt (5), which passes through the second orifices (23; 17) in the plate (18) and in the fixed wall (4), a nut (6) bearing against the thinner part of the edge (25) of the second orifice (23) in the plate (18).

**Patentansprüche**

1. Bremsverstärker-Baugruppe (1), die auf einer Fläche (3) einer festen Wandung (4) eines Fahrzeugs angebracht ist, mit wenigstens einem Montagebolzen (5), der ein Ende (16) aufweist, welches fest mit dem Bremsverstärker verbunden ist, und einem Gewindeteil (7), der eine erste in der Wandung gebildete Öffnung (12) durchquert, sowie mit einer Schraubmutter (6), die auf den Gewindeteil des Bolzens aufgeschraubt ist und die andere Fläche (8) der festen Wandung (4) überragt, dadurch gekennzeichnet, daß eine erste Öffnung (12) der Wandung (4) eine gestreckte Gestalt aufweist, mit einer ersten Endzone (13) vergrößerten Querschnitts, welche den Durchgang der auf den Gewindeteil (7) des Bolzens (5) aufgeschraubten Schraubmutter (6) in axialer Abstützung gegen eine rohrförmige Stütze (15) zuläßt, die auf dem Bolzen montiert ist, wobei die erste Endzone (13) an eine zweite Endzone (14) angeschlossen ist, deren Querschnitt demjenigen der Stütze (15) entspricht, und mit einem Anzugteil (18, 24), das manuell zwischen die andere Fläche (8) der Wandung und die Schraubmutter (6) eingesetzt wird.

2. Baugruppe nach Anspruch 1, dadurch gekennzeichnet, daß das Anzugteil durch eine Platte (18) gebildet ist, welche einen Ausschnitt (20) aufweist, der mit einem Rand (24) versehen ist, welcher zu Führungszwecken mit der Stütze (15) zusammenwirkt und eine variable Dicke (24) aufweist.

3. Baugruppe nach Anspruch 2, dadurch gekennzeichnet, daß der Ausschnitt der Platte (18) in Form einer ersten Öffnung (20) vorhanden ist, welche eine gestreckte Gestalt aufweist, mit einer ersten Endzone (21) vergrößerten Querschnitts, die den Durchgang der auf den Gewindeteil (7) des Bolzens (5) aufgeschraubten Schraubmutter (6) in Abstützung auf der Stütze (15) zuläßt, wobei die erste Endzone (21) an eine zweite Endzone (22) anschließt, deren Querschnitt demjenigen der Stütze (15) entspricht, wobei der Rand der ersten Öffnung (24) der Platte eine Dicke aufweist, die von der ersten Endzone (21) zur zweiten Endzone (22) hin zunimmt.

4. Baugruppe nach einem der Ansprüche 1 bis 3, dadurch gekennzeichnet, daß sie Mittel (6, 23, 25) umfaßt, um die Platte (18) im Endmontagezustand festzulegen.

5. Baugruppe nach Anspruch 4, dadurch gekennzeichnet, daß die Festlegungsmittel durch eine zweite gestreckte Öffnung (23), die in der Platte (18) gebildet ist und von einem weiteren Montagebolzen (5) des Bremsverstärkers durchquert wird, der eine zweite gestreckte Öffnung (17) in der Wandung durchquert, gebildet sind, wobei die zweite Öffnung (23) der Platte (18) einen Rand (25) mit einer Dicke aufweist, die in entgegengesetztem Sinne zu der des Randes (24) der ersten Öffnung (20) der Platte (18) variiert.

6. Baugruppe nach Anspruch 5, dadurch gekennzeichnet, daß die zweiten Öffnungen (23; 17) der Platte (18) und der festen Wandung (4) jeweils einen Querschnitt aufweisen, der dem des Gewindeteils (7) des Bolzens (5) entspricht.

7. Baugruppe nach Anspruch 6, dadurch gekennzeichnet, daß die erste (20; 12) und die zweite (23; 17) Öffnung der Platte (18) und der festen Wand (4) die allgemeine Gestalt eines Kreisbogens aufweisen.

8. Montageverfahren für eine Baugruppe nach einem der Ansprüche 3 bis 7, dadurch gekennzeichnet, daß es folgende Schritte umfaßt:

– vorbereitendes Aufschieben der rohrförmigen Stütze (15) auf den Gewindeteil (7) des Bolzens (5);

– Aufschrauben des Bolzens (6) auf diesen Gewindeteil in axialer Abstützung auf der Stütze (15);

– Durchführen des Endteils (7) des Bolzens (5), der mit seiner Schraubmutter (6) und seiner Stütze (15) versehen ist, quer durch die erste Endzone (13) der ersten Öffnung (12) der festen Wand (4) hindurch;

– Bewegung des Bremsverstärkers (1) bezüglich der festen Wand (4), um die Stütze (15) in die zweite Endzone (14) der ersten Öffnung (12) der festen Wand (4) zu bewegen;

– Anlegen der Platte (18) gegen die andere Fläche (8) der festen Wand (4), wobei die auf den Gewindeteil (7) des Bolzens (5) aufgeschraubte Schraubmutter (6) quer durch die erste Endzone (21) der ersten Öffnung (20) der Platte (18) bewegt wird;

– Bewegung der Platte (18) in solcher Weise, daß ein Keileffekt über den Rand (24) der ersten Öffnung (20) der Platte (18) zwischen der anderen Fläche (8) der festen Wand (4) und der Schraubmutter (6) bewirkt wird.

9. Verfahren nach Anspruch 8, zum Montieren einer Baugruppe nach einem der Ansprüche 5 bis 7, dadurch gekennzeichnet, daß es den nachfolgenden Schritt umfaßt, bei welchem auf den anderen Bolzen (5), welcher die zweiten Öffnungen (23; 17) der Platte (18) und der festen Wand (4) durchquert, eine Schraubmutter (6) aufgeschraubt wird, die sich auf dem verjüngten Teil des Randes (25) der zweiten Öffnung (23) der Platte (18) abstützt.

III

1

F

6

5

9

10

11

5

6

4

III

## FIG.1

2

4

3

1

8

16

22

14

7

5

6

15

24

18

10

9

19

## FIG.2

**FIG.3**

**FIG.4A**

**FIG.4**

**FIG.4B**

**FIG.4C**